# EUROPEAN PATENT APPLICATION

(11) **EP 4 079 257 A1**
(43) Date of publication of application: **26.10.2022**
(21) Application number: 20901949.6
(22) Date of filing: 28.10.2020
(51) Int. Cl.: A61C 8/00

(54) **CEMENTLESS TYPE DENTAL IMPLANT**

(30) Priority: 16.12.2019 KR 20190168285
(71) Applicant: Cowellmedi Co., Ltd., Busan 46986 (KR)
(72) Inventor: KIM, Soo Hong, Seoul 06717 (KR); SON, Seong Kyu, Busan 47808 (KR)
(74) Representative: Stöckeler, Ferdinand
(86) International application number: PCT/KR2020/014799
(87) International publication number: WO 2021/125544

(57) **Abstract**

The present disclosure relates to a cementless type dental implant that enables a crown to be firmly coupled to an abutment without dental cement. The present disclosure provides a cementless type dental implant including: an abutment having vertical slits spaced apart from each other around an upper portion thereof, and having elastic coupling protrusions disposed between the vertical slits and radially providing elasticity; a crown cap having a coupling portion formed at a lower portion therein so that the upper portion of the abutment is inserted therein, having a screw hole formed at an upper portion therein, having a coupling step formed at an angle radially outward at a center therein to couple the elastic coupling protrusions of the abutment, and having a crown integrally formed outside; and an abutment screw inserted and fastened in a screw insertion hole of the abutment and having a protrusion pressing portion formed at an upper end thereof and pushing the elastic coupling protrusions of the abutment radially outward when being fastened such that the elastic coupling protrusions of the abutment are coupled inside the coupling step of the crown cap.

## Description

### Technical Field

The present disclosure relates to a dental implant that is fixed in the alveolar bone, thereby compensating for a loss of tooth.

### Background Art

Unless stated otherwise in this specification, the contents described in this section are not the related art about the claims of this application and not all of the contents described in this section are regarded as the related art.

In general, teeth are body parts that are perform mastication to help digestion by finely breaking or grinding food. When a tooth is lost by extraction, for example, due to decaying, a problem with mastication is caused, so it is difficult to chew food and digestion becomes poor. Accordingly, it is difficult to freely eat food and take nutrition well. Therefore, teeth have been recognized as important parts of a body from the past and play an important part in leading a healthy life.

In general, humans have a total of 32 teeth including 16 teeth in the upper jaw and 16 teeth in the lower jaw, baby teeth developing in babyhood are replaced with permanent teeth one time in childhood, and then the oral action is performed by the permanent teeth for the a person's whole life.

Since the teeth of humans do not newly develop even if they are lost after the baby teeth are once replaced with permanent teeth in childhood, lost teeth or surrounding tissues are restored by dental prosthetic treatment.

For example, general prostheses such as a bridge, a partial artificial tooth, and artificial teeth cause inconvenience in use due to irritation, etc. For this reason, recently, a dental implant that makes it possible to recover all functions and the external appearance that are the same as those of a natural tooth without injuring teeth or the surrounding tissues when a tool is lost is spotlighted.

A dental implant is composed of a fixture that is fixed in the alveolar bone, an abutment that is coupled to the fixture, and a crown that is integrally coupled to the abutment. The fixture corresponds to an artificial root of a tooth that is embedded and fixed in the alveolar bone, the abutment serves to connect the fixture and the crown to each other, and the crown corresponds to an artificial tooth that reproduces the same shape and function as a natural tooth.

A dental implant may be formed in a separate type of a fixture and an abutment and may include an implant fixer in which a fixture and an abutment are integrated. Further, in a dental implant, a bolt for fastening an abutment to a fixture may be integrated with the abutment or may be formed separately from the abutment.

In these dental implants described above, dental cement is used to integrally couple a crown to an abutment.

As an example of these dental implants, an abutment of an implant for a crown has been disclosed in Korean Patent Application Publication No. 10-2004-0034874 (published on 2004. 04. 29). The abutment includes an artificial tooth fixer that has a hexagonal head protruding on the top and a fastening hole formed at the center of the top, a lower installation body that has an insertion hole at the center coupled to the top of the hexagonal head of the artificial tooth fixer and has a hexagonal groove fitted to the hexagonal head of the artificial tooth fixer, and an upper installation body that is installed on the lower installation body and has a thread portion at the lower portion, in which an artificial tooth is bonded to the upper portion of the assembly of the lower installation body and the upper installation body by a dental cement.

Further, a dental implant including a fixture that is fixed in the alveolar bone, an abutment that extends upward from the fixture, an artificial tooth that is fitted on the abutment, and a dental cement that contains silver and is disposed between the abutment and the artificial tooth to bond the abutment and the artificial tooth has been disclosed in Korean Patent Application Publication No. 10-2009-0048078 (published on 2009. 05. 13).

However, according to these dental implants, there is a problem that since the dental cement is necessarily inserted between the abutment and the crown, it is difficult to completely remove the dental cement, whereby inflammation may be caused around the implants.

### Disclosure

### Technical Problem

An objective of the present disclosure is to provide a cementless type dental implant that enables a crown to be firmly coupled to an abutment without dental cement.

It is apparent that the present disclosure is not limited to the objective described above and other objectives can be derived from the following description.

### Technical Solution

The present disclosure provides a cementless type dental implant including: an abutment having vertical slits spaced apart from each other around an upper portion thereof, having elastic coupling protrusions disposed between the vertical slits and radially providing elasticity, and having a screw insertion hole at a center thereof; a crown cap having a coupling portion formed at a lower portion therein so that the upper portion of the abutment is inserted therein, having a screw hole formed at an upper portion therein, having a coupling step formed at an angle radially outward at a center therein to couple the elastic coupling protrusions of the abutment, and having a crown integrally formed outside; and an abutment screw inserted and fastened in the screw insertion hole of the abutment and having a protrusion pressing portion formed at an upper end thereof and pushing the elastic coupling protrusions of the abutment radially outward when being fastened such that the elastic coupling protrusions of the abutment are coupled inside the coupling step of the crown cap.

According to characteristics of the present disclosure, the protrusion pressing portion of the abutment screw may have an inverse frustoconical shape of which a horizontal cross-section becomes large upward.

### Advantageous Effects

According to the cementless type dental implant of the present disclosure, since the elastic coupling protrusions of the abutment are opened radially upward and coupled to the coupling step of the crown cap by the protrusion pressing portion of the abutment screw when the abutment screw is fastened, it is possible to firmly couple the crown to the abutment without a dental cement. Accordingly, there is the advantage that it is possible to prevent inflammation due to dental cement.

The effects of the present disclosure are not limited to those described above and other effects not stated herein may be made apparent to those skilled in the art from claims.

### Description of Drawings

FIG. 1 is a perspective view of a cementless type dental implant according to an embodiment of the present disclosure.
FIGS. 2 to 4 are exploded perspective views of various embodiments of the cementless type dental implant according to an embodiment of the present disclosure.
FIGS. 5 to 7 are operation views of various embodiments of the cementless type dental implant according to an embodiment of the present disclosure.

### Mode for Invention

Hereafter, the configurations and operation effects of exemplary embodiments are described with reference to the accompanying drawings. For reference, the components are not shown or are schematically shown in the drawings for the convenience and clearness of the following description and the sizes of the components do not reflect the actual sizes. Further, the same reference numerals indicate the same components throughout the specification and the reference numerals for the same components are omitted in each drawing.

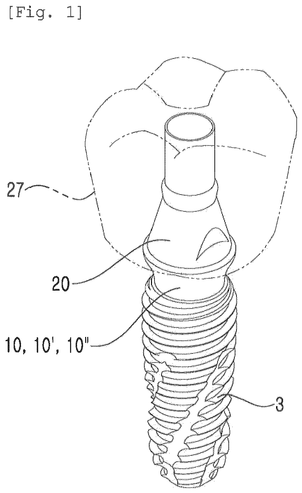

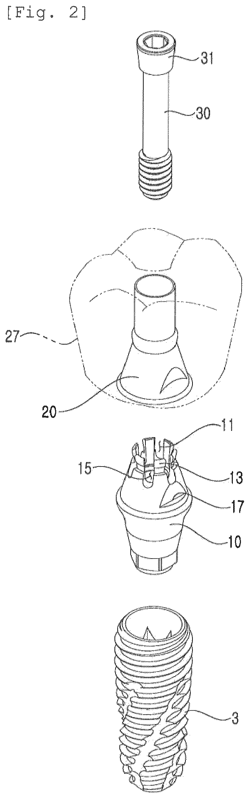

FIG. 1 is a perspective view of a cementless type dental implant according to an embodiment of the present disclosure, and FIGS. 2 to 4 are exploded perspective views of various embodiments of the cementless type dental implant according to an embodiment of the present disclosure.

A cementless type dental implant according to an embodiment of the present disclosure, as shown in FIGS. 1 to 4, includes: an abutment 10, 10', 10" that has vertical slits 11 spaced apart from each other around an upper portion thereof and has elastic coupling protrusions 13 disposed between the vertical slits 11 and radially providing elasticity; a crown cap 20 that has a coupling portion 21 formed at a lower portion therein so that the upper portion of the abutment 10, 10', 10" is inserted therein, has a screw hole 23 formed at an upper portion therein, has a coupling step 25 formed at an angle radially outward at the center therein to couple the elastic coupling protrusions 13 of the abutment 10, 10', 10", and has a crown 27 integrally formed outside; and an abutment screw 30 that is inserted and fastened in a screw insertion hole 15 of the abutment 10, 10', 10" and has a protrusion pressing portion 31 formed at the upper end thereof and pushing the elastic coupling protrusions 13 of the abutment 10, 10', 10" radially outward when being fastened such that the elastic coupling protrusions 13 of the abutment 10, 10', 10" are coupled inside the coupling step 25 of the crown cap 20.

The abutment 10, 10', 10" corresponds to a connection support that connects and fixes the crown 27, which corresponds to an artificial tooth, to a fixture 3 that is embedded and fixed in the alveolar bone.

The vertical slits 11 are spaced apart from each other around the upper portion of the abutment 10, 10', 10". The vertical slits 11 are formed by vertically cutting the upper portion of the abutment 10, 10', 10" so that elasticity can be radially applied to the elastic coupling protrusions 13 to be described below. One vertical slit 11 may be formed, for example, at each 180 degrees, 120 degrees, or 60 degrees around the upper portion of the abutment 10, 10', 10". The lower ends of the vertical slits 11 may be rounded.

The elastic coupling protrusions 13 radially providing elasticity are formed between the vertical slits 11. When the abutment screw 30 to be described below is fastened, the elastic coupling protrusions 13 are pushed and opened radially outward by the protrusion pressing portion 31 of the abutment screw 30 and are coupled to the coupling step 25 of the crown cap 20 to be described below so that the crown cap 20 including the crown 27 can be firmly coupled to the abutment 10, 10', 10" without a dental cement.

In order that the elastic coupling protrusions 13 formed by the vertical slits 11 dividing the upper portion of the abutment 10, 10', 10" can be easily opened radially outward, the lower portions of the elastic coupling protrusions 13 are relatively thinly formed by ring grooves 13a but the upper portions expand radially outward as they go upward.

The screw insertion hole 15 is formed in the center of the abutment 10, 10', 10". The abutment screw 30 to be described below is inserted and fastened in the screw insertion hole 15 or is inserted through the screw insertion hole 15 to be fastened to the fixture. The abutment screw 30 is a threaded hole with a closed lower end in the former case and is a through-hole having an inner diameter larger than the body of the abutment screw 30 and smaller than the protrusion pressing portion 31 of the abutment screw 30 in the latter case.

The abutment 10 may be a fastening bolt-integrated abutment in which, as shown in FIGS. 1 and 2, a fastening bolt part 10a that is fastened to the fixture 3 that is embedded and fixed in the alveolar bone is integrally formed at the lower portion. In this case, the screw insertion hole 15 is a threaded hole with a closed lower end.

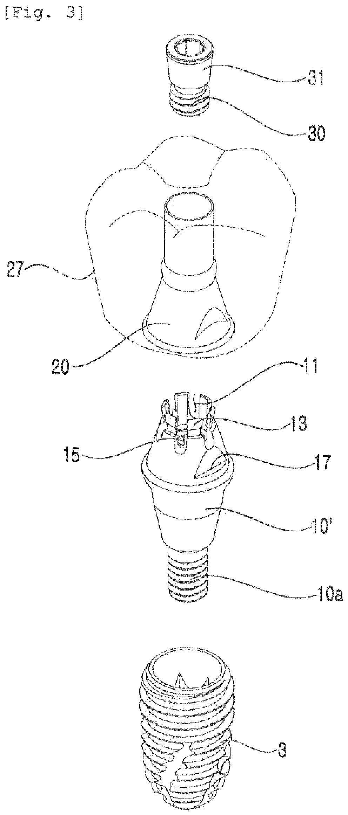

Alternatively, depending on embodiments, the abutment 10' may be a common abutment of which the lower portion is inserted in the fixture 3 that is embedded and fixed in the alveolar bone, as shown in FIG. 3. In this case, the screw insertion hole 15 is a through-hole having an inner diameter larger than the body of the abutment screw 30 and smaller than the protrusion pressing portion 31 of the abutment screw 30.

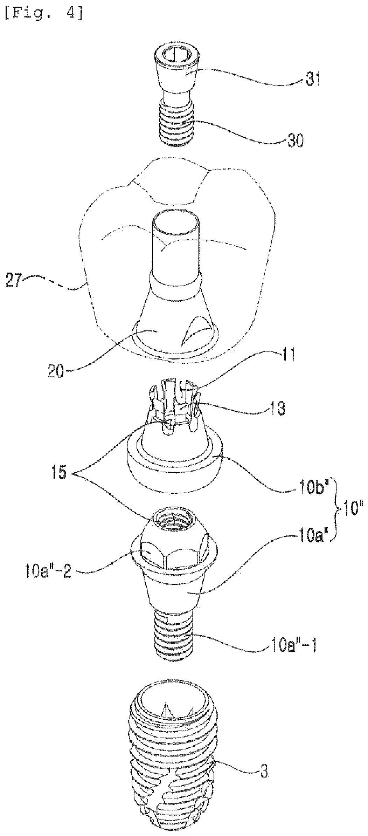

Alternatively, depending on embodiments, the abutment 10", as shown in FIG. 4, may include: an abutment body 10a" having a fastening bolt part 10a"-1 integrally formed at the lower portion thereof to be fastened to the fixture 3 that is embedded and fixed in the alveolar bone, and having a polygonal coupling protrusion 10a"-2 formed on the upper portion thereof; and a ring-shaped abutment cap 10b" having a polygonal coupling groove 10b"-1 at the lower portion thereof in which the polygonal coupling protrusion 10a"-2 is inserted, and having elastic coupling protrusions 13 formed around the upper end thereof. In this case, the screw insertion hole 15 is a threaded hole with a closed lower end.

Though not shown, the abutment may be formed like an implant fixer in which a fixture and an abutment are integrated.

An anti-rotation cut 17 preventing unexpected rotation of the crown cap 20 to be described below is formed at a side on the outer surface of the upper portion of the abutment 10, 10', 10". Through not shown, in order to prevent unexpected rotation of the crown cap 20, the outer surface of the upper portion of the abutment 10, 10', 10" may be in a polygonal shape or an anti-rotation protrusion may be formed on the outer surface of the upper portion of the abutment 10, 10', 10".

The crown cap 20 is coupled to the upper portion of the abutment 10, 10', 10". The crown cap 20 serves to form a kind of coupling cap such that the crown 27 forming an artificial tooth is connected and fixed to the abutment 10, 10', 10", and the crown 27 is integrally formed outside the crown cap 20.

The coupling portion 21 in which the upper portion of the abutment 10, 10', 10" is inserted formed at the lower portion inside the crown cap 20. The coupling portion 21 may have a shape of which the inner diameter decreases upward to correspond to the shape of the upper portion of the abutment 10, 10', 10".

The screw hole 23 is formed at the upper portion inside the crown cap 20. The screw hole 23, which is a part in which the abutment screw 30 to be described below is inserted or a rotation tool for rotating the abutment screw 30 is inserted, is generally vertically formed through the crown cap 20 to communicate with the coupling portion 21, but may be inclined to communicate the coupling portion 21 in an inclined implant.

The coupling step 25 to which the elastic coupling protrusions 13 of the abutment 10, 10', 10" is coupled is formed at an angle radially outward at the center inside the crown cap 20, that is, at the boundary between the coupling portion 21 and the screw hole 23.

The abutment screw 30 is inserted and fastened in the screw insertion hole 15 of the abutment 10, 10', 10" with the crown cap 20 coupled to the upper portion of the abutment 10, 10', 10".

The abutment screw 30 is fastened and fixed in the screw insertion hole 15 or is inserted through the screw insertion hole 15 with the lower portion fastened and fixed in the fixture 3, and opens radially outward the elastic coupling protrusions 13 of the abutment 10, 10', 10".

Threads are formed on the lower portion of the abutment screw 30 so that the abutment screw 30 is fastened and fixed in the screw insertion hole 15 of the abutment 10, 10', 10" or is fastened and fixed in the fixture 3.

The protrusion pressing portion 31 that pushes and opens radially outward the elastic coupling protrusions 13 of the abutment 10, 10', 10" when the abutment screw 30 is fastened so that the elastic coupling protrusions 13 of the abutment 10, 10', 10" is coupled inside the coupling step 25 of the crown cap 20 is formed at the upper end of the abutment screw 30.

The protrusion pressing portion 31 may have an inverse frustoconical shape of which the horizontal cross-section becomes large upward, but may have any shape as long as it has an expanding portion to open radially outward the elastic coupling protrusions 13 of the abutment 10, 10', 10". Ring-shaped prominences and depressions may be formed on the outer surface of the protrusion pressing portion 31.

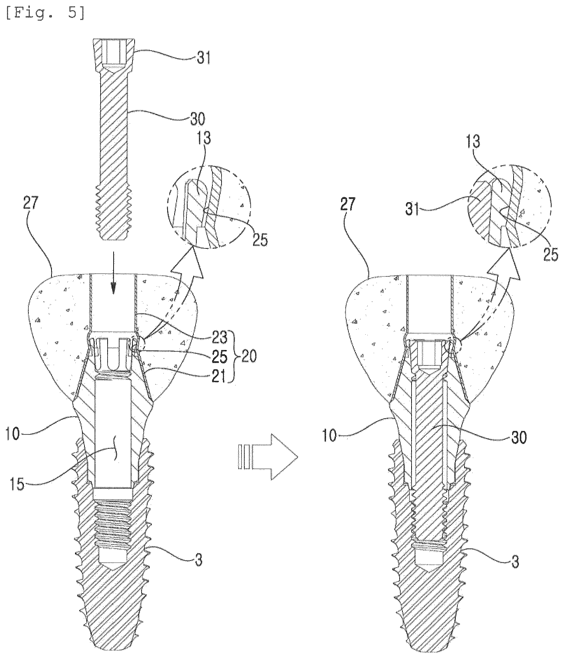

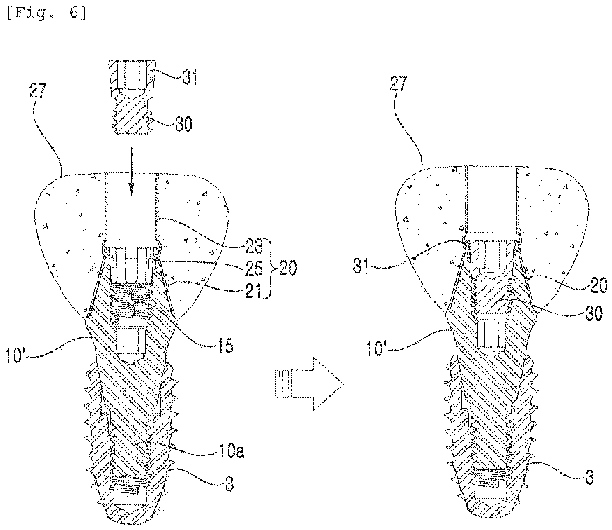

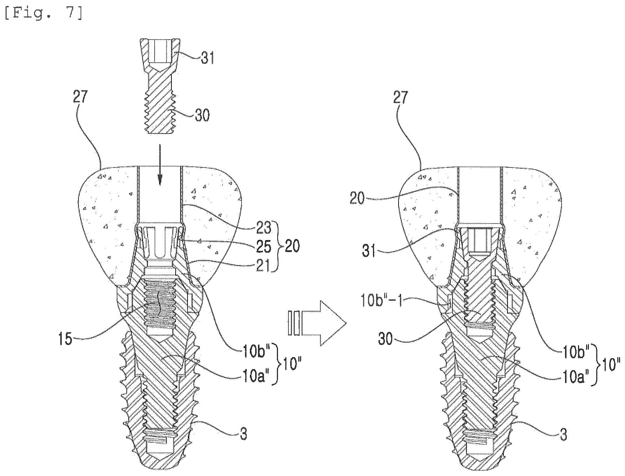

FIGS. 5 to 7 are operation views of various embodiments of the cementless type dental implant according to an embodiment of the present disclosure.

When the abutment screw 30 is inserted and directly fastened and fixed in the screw insertion hole 15 of the abutment 10, 10', 10" or is inserted through the screw insertion hole 15 of the abutment 10, 10', 10" and fastened and fixed in the fixture with the crown cap 20 coupled to the upper portion of the abutment 10, 10', 10", as shown in FIGS. 5 to 7, the protrusion pressing portion 31 of the abutment screw 30 pushes radially outward the elastic coupling protrusions 13 of the abutment 10, 10', 10".

Further, the elastic coupling protrusions 13 of the abutment 10, 10', 10" are coupled to the coupling step 25 of the crown cap 20 while being opened radially outward. Accordingly, the crown cap 20 integrally formed with the crown 27 can be firmly coupled to the abutment 10, 10', 10" without a dental cement.

Although embodiments of the present disclosure were described above with reference to the accompanying drawings, the configurations described in the embodiments and drawings of the present disclosure are merely most preferable embodiments but do not represent all of the technical spirit of the present disclosure. Thus, the present disclosure should be construed as including all the changes, equivalents, and substitutions included in the spirit and scope of the present disclosure at the time of filing this application. Therefore, it should be understood that the embodiment described above is not limitative, but only an example in all respects, the scope of the present disclosure is expressed by claims described below, not the detailed description, and it should be construed that all of changes and modifications achieved from the meanings and scope of claims and equivalent concept are included in the scope of the present disclosure.

### Industrial Applicability

The present disclosure can be applied to the field of dental implant.

## Claims

1. A cementless type dental implant comprising:
an abutment having vertical slits spaced apart from each other around an upper portion thereof, having elastic coupling protrusions disposed between the vertical slits and radially providing elasticity, and having a screw insertion hole at a center thereof;
a crown cap having a coupling portion formed at a lower portion therein so that the upper portion of the abutment is inserted therein, having a screw hole formed at an upper portion therein, having a coupling step formed at an angle radially outward at a center therein to couple the elastic coupling protrusions of the abutment, and having a crown integrally formed outside; and
an abutment screw inserted and fastened in the screw insertion hole of the abutment and having a protrusion pressing portion formed at an upper end thereof and pushing the elastic coupling protrusions of the abutment radially outward when being fastened such that the elastic coupling protrusions of the abutment are coupled inside the coupling step of the crown cap.

2. The cementless type dental implant of claim 1, wherein the abutment is a fastening bolt-integrated abutment in which a fastening bolt part, which is fastened to a fixture that is embedded and fixed in the alveolar bone, is integrally formed at a lower portion.

3. The cementless type dental implant of claim 1, wherein the abutment is a common abutment of which a lower portion is inserted in a fixture that is embedded and fixed in the alveolar bone, and the abutment screw is inserted through the screw hole such that a lower end thereof is fastened in the fixture, thereby pressing and fixing the abutment to the fixture.

4. The cementless type dental implant of claim 1, wherein the abutment includes: an abutment body having a fastening bolt part integrally formed at a lower portion thereof to be fastened to a fixture that is embedded and fixed in the alveolar bone, and having a polygonal coupling protrusion formed on an upper portion thereof; and a ring-shaped abutment cap having a polygonal coupling groove at a lower portion thereof in which the polygonal coupling protrusion is inserted, and having the elastic coupling protrusions formed around an upper end thereof.

5. The cementless type dental implant of any one of claims 1 to 4, wherein an anti-rotation cut preventing unexpected rotation of the crown is formed at a side on an outer surface of the upper portion of the abutment.

6. The cementless type dental implant of any one of claims 1 to 4, wherein the screw hole of the crown cap is formed vertically or at an angle.

7. The cementless type dental implant of any one of claims 1 to 4, wherein the protrusion pressing portion of the abutment screw has an inverse frustoconical shape of which a horizontal cross-section becomes large upward.
